# EUROPEAN PATENT SPECIFICATION

(11) **EP 3 584 586 B1**
(45) Date of publication and mention of the grant of the patent: **09.02.2022**
(21) Application number: 19176947.0
(22) Date of filing: 28.05.2019
(51) Int. Cl.: G01P 3/49, G01P 3/50, G01P 3/52

(54) **SPEED DETECTING DEVICE AND SPEED DETECTING METHOD**
GESCHWINDIGKEITSERFASSUNGSVORRICHTUNG UND GESCHWINDIGKEITSERFASSUNGSVERFAHREN
DISPOSITIF ET PROCÉDÉ DE DÉTECTION DE VITESSE

(30) Priority: 29.05.2018 JP 2018102399
(43) Date of publication of application: 25.12.2019
(73) Proprietor: Nabtesco Corporation, Tokyo (JP)
(72) Inventor: FLANKL, Michael, 8092 Zürich (CH); TUEYSUEZ, Arda, 8092 Zürich (CH); KOLAR, Johann W., 8092 Zürich (CH); TSUKADA, Yusuke, Kyoto-shi, Kyoto (JP); NAKAMURA, Kazuhito, Kyoto-shi, Kyoto (JP)
(74) Representative: Grünecker Patent- und Rechtsanwälte PartG mbB

(56) References cited:
- JP-A- H1 016 761
- JP-A- H08 211 085
- JP-A- 2015 152 473
- JP-A- 2016 022 489
- US-B1- 6 538 433
- US-B2- 8 148 976
- THESS A ET AL: "Lorentz force velocimetry", PHYSICAL REVIEW LETTERS, AMERICAN PHYSICAL SOCIETY, US, vol. 96, no. 16, 28 April 2006 (2006-04-28), pages 164501-1, XP002517415, ISSN: 0031-9007, DOI: 10.1103/PHYSREVLETT.96.164501 [retrieved on 2006-04-25]

## Description

### TECHNICAL FIELD

Embodiments of the present invention relate to a speed detecting device and a speed detecting method for detecting a speed of a moving body in a non-contact manner.

### BACKGROUND

A speed detecting device is shown for example in US 6,538,433 B1, US 8, 148 976 B2 and Thess et al: "Lorenz Force velocimetry", Phys. Rev. Lett. Vol. 96, n.16, pages 164501-1, 2006. There has been provided a vehicle speed sensor for detecting a traveling speed of a vehicle in a non-contact manner (see Patent Literature 1: JPH01302165). In Patent Literature 1, an absolute speed of a vehicle is sensed using an electromagnetic force acting between a magnet provided on the vehicle and moving in a traveling direction and a track. More specifically, a traveling speed is detected by detecting an electromagnetic force in the traveling direction and an electromagnetic force in the vertical direction and tabulating an arithmetic expression for converting the detected electromagnetic forces into a traveling speed.

Since a vehicle traveling is continually vibrating, the detected electromagnetic forces contain noise components produced by vibration of the vehicle. Patent Literature 1 does not disclose a method of reducing the effect of the noise such as produced by vibration of the vehicle, and therefore, the method of Patent Literature 1 may fail to detect the traveling speed of the vehicle accurately.

### SUMMARY

According to the embodiments of the present invention, a speed detecting device comprises: a magnetic flux producing unit spaced apart from a principal surface of a relative moving body and configured to change, at a predetermined frequency, magnetic flux passing over the principal surface of the relative moving body; a stress detecting unit for detecting a stress and outputting an electric signal corresponding to the stress; a stress transmitting member for transmitting to the stress detecting unit a Lorentz force produced in the magnetic flux producing unit in accordance with magnetic flux produced by eddy currents, the eddy currents occurring on the relative moving body in accordance with a moving or rotating speed of the relative moving body; a frequency band extracting unit for extracting a frequency component related to the Lorentz force from the electric signal; and a speed estimating unit for estimating the moving or rotating speed of the relative moving body based on the frequency component extracted by the frequency band extracting unit.

### BRIEF DESCRIPTION OF THE DRAWINGS

Fig. 1 schematically shows a speed detecting device according to a first embodiment of the present invention.
Fig. 2 explains a Lorentz force produced in a magnetic flux producing unit.
Fig. 3 shows in Part (a) a waveform of an electric current flowing through an excitation coil in the magnetic flux producing unit, and Fig. 3 also shows in Part (b) a waveform of the Lorentz force produced in the magnetic flux producing unit.
Fig. 4 is a block diagram showing a speed detecting device according to a variation.
Fig. 5A shows an example of the magnetic flux producing unit having a yoke and an excitation coil wound thereon.
Fig. 5B shows another example of the magnetic flux producing unit having a yoke and an excitation coil wound thereon.
Fig. 5C shows another example of the magnetic flux producing unit having a yoke and an excitation coil wound thereon.
Fig. 6 schematically shows a speed detecting device according to a second embodiment of the present invention.
Fig. 7A schematically shows a speed detecting device which is not an embodiment of the claimed invention.
Fig. 7B schematically shows a variation of Fig. 7A.

### DESCRIPTION OF THE PREFERRED EMBODIMENTS

With reference to the appended drawings, the following describes one embodiment of the present disclosure. For convenience of illustration and ease of understanding, each of the drawings appended hereto appears in a scale size, an aspect ratio, and the like altered as appropriate from actual ones for emphasis.

Moreover, terms, values, and so on used herein to specify a shape, a geometric condition, and an extent thereof, such as, for example, terms including "parallel," "orthogonal," and "equal" and values of a length and an angle, are not bound to a strict meaning thereof but should be interpreted as covering a range that can be expected to achieve similar functionality.

### < First Embodiment >

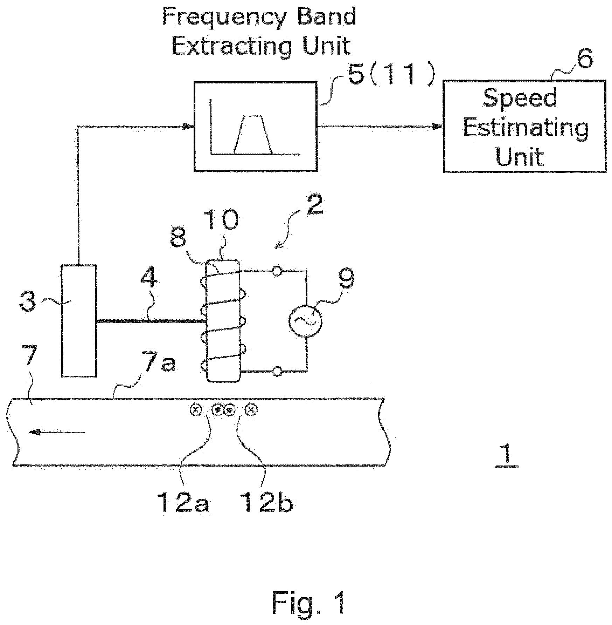

Fig. 1 schematically shows a speed detecting device 1 according to a first embodiment of the present invention. The speed detecting device 1 in Fig. 1 is provided with a magnetic flux producing unit 2, a stress detecting unit 3, a stress transmitting member 4, a frequency band extracting unit 5, and a speed estimating unit 6.

The magnetic flux producing unit 2 is spaced apart from a principal surface 7a of the relative moving body 7 and configured to change at a predetermined frequency the magnetic flux passing over the principal surface 7a of the relative moving body 7. The predetermined frequency is, for example, a frequency different from the frequency band related to the inertial force acting on the stress detecting unit 3 in accordance with the acceleration or deceleration of the relative moving body 7. Alternatively, the predetermined frequency may be a frequency different from the frequency bands of disturbance noise detected by the stress detecting unit 3 in accordance with the acceleration or deceleration of the relative moving body 7. The magnetic flux producing unit 2 includes an excitation coil 8 configured to change at a predetermined frequency the magnetic flux passing over the principal surface 7a of the relative moving body 7. The excitation coil 8 is connected at both ends thereof to, for example, an alternating-current source 9, and the electric current flowing to the excitation coil 8 alternates at a predetermined frequency. It is also possible to replace the alternating-current source 9 with, for example, a direct-current source and a switch and connect a capacitor to the excitation coil 8 in series thereby to form a resonance circuit. The excitation coil 8 is wound along the surface of a magnetic member 10. When an alternating current flows through the excitation coil 8 and the relative moving body 7 is moved or rotated, the magnetic member 10 produces a Lorentz force in a direction according to the movement or rotation of the relative moving body 7.

The stress detecting unit 3 detects a stress and outputs an electric signal corresponding to the stress. The stress detecting unit 3 is constituted by, for example, a force sensor, a strain sensor, a piezoelectric sensor, an air pressure sensor, or the like.

The stress transmitting member 4 transmits to the stress detecting unit 3 the Lorentz force produced in the magnetic flux producing unit 2 in accordance with the magnetic flux produced by the eddy currents occurring on the relative moving body 7 in accordance with the moving or rotating speed of the relative moving body 7. The stress transmitting member 4 is, for example, a rigid member. The rigid member may be made of any material that preferably has such a rigidity capable of transmitting the Lorentz force produced in the magnetic flux producing unit 2 to the stress detecting unit 3 without loss. More specifically, the rigid member is preferably made of a less deformable material such as a metal or a resin. The stress transmitting member 4 may be an air pressure transmitting member such as a piston configured to compress the air with a compressive force in accordance with the stress.

The frequency band extracting unit 5 extracts a frequency component related to the Lorentz force from the electric signal. The frequency band extracting unit 5 includes, for example, a band-pass filter 11. The band-pass filter 11 has such a frequency characteristics as to pass mainly the frequency components related to the Lorentz force.

The speed estimating unit 6 estimates the moving or rotating speed of the relative moving body 7 based on the frequency component extracted by the frequency band extracting unit 5.

The relative moving body 7 is a conductor that can produce an eddy current on the principal surface 7a thereof. The relative moving body 7 is spaced by a gap from one end portion of the magnetic flux producing unit 2. Hereinafter, a description will be first given of the principle of the Lorentz force produced in the magnetic flux producing unit 2 when the relative moving body 7 moves in a predetermined direction in a state where the magnetic flux producing unit 2 changes the magnetic flux at a predetermined frequency.

Eddy currents 12a, 12b are produced on the principal surface 7a of the relative moving body 7 in accordance with the moving speed of the relative moving body 7. The direction of the eddy currents 12a, 12b depends on the moving direction of the relative moving body 7. Since the magnetic flux produced in the magnetic flux producing unit 2 changes periodically, the magnitude of the eddy currents 12a, 12b changes periodically. The description given herein is based on an example in which the relative moving body 7 moves, but the movement of the relative moving body 7 may also refer to the case where the relative moving body 7 is stationary and the magnetic flux producing unit 2 moves. That is, the movement of the relative moving body 7 refers to relative movement between the relative moving body 7 and the magnetic flux producing unit 2. The gap between the principal surface 7a of the relative moving body 7 and the magnetic flux producing unit 2 is limited within a range where the magnetic flux from the magnetic flux producing unit 2 can reach the principal surface 7a of the relative moving body 7. In addition, the term "movement" used herein may include "rotation." The relative moving body 7 described herein may either move in a predetermined direction or rotate about a predetermined rotation axis.

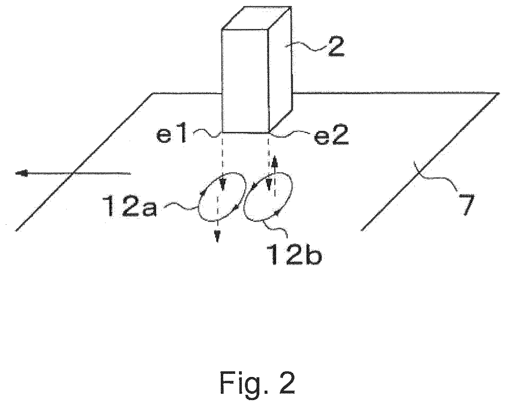

As shown in Fig. 2, the eddy currents 12a, 12b are produced on the principal surface 7a of the relative moving body 7 in accordance with the direction of the magnetic flux produced in the magnetic flux producing unit 2, opposed to the principal surface 7a of the relative moving body 7, and the moving direction of the relative moving body 7. In Fig. 1, the eddy currents 12a, 12b flowing vertically to the drawing in a direction from the proximal side to the distal side is represented by "×", and the eddy currents 12a, 12b flowing vertically to the drawing in a direction from the distal side to the proximal side is represented by "•". On the principal surface of the relative moving body 7, eddy currents other than the eddy currents 12a, 12b are produced in such a direction as to cancel the alternating magnetic flux from the magnetic flux producing unit 2, but such eddy currents are not shown in Figs. 1 and 2.

When the relative moving body 7 moves or rotates, the eddy currents 12a, 12b are generated on the principal surface 7a of the relative moving body 7 in such a direction as to hinder a change of the magnetic flux from the magnetic flux producing unit 2. The Lorentz force is produced in the magnetic flux producing unit 2 by the interaction (the repulsive force and the attractive force) between the magnetic flux produced by the eddy currents 12a, 12b and the magnetic flux from the magnetic flux producing unit 2.

For example, when a magnetic flux in a direction toward the principal surface 7a of the relative moving body 7 is produced in the magnetic flux producing unit 2, the direction of the eddy current 12a occurring on the principal surface 7a of the relative moving body 7 at a portion reached by the magnetic flux from an edge e1 of the magnetic flux producing unit 2 at the front in the moving direction of the relative moving body 7 is different from the direction of the eddy current 12b occurring on the principal surface 7a of the relative moving body 7 at a portion reached by the magnetic flux from an edge e2 of the magnetic flux producing unit 2 at the rear in the moving direction of the relative moving body 7. The eddy current 12b generated by the magnetic flux from the edge e2 flows in such a direction as to generate magnetic flux in an opposite direction than the magnetic flux from the magnetic flux producing unit 2. On the other hand, the eddy current 12a generated on the principal surface 7a of the relative moving body 7 at a portion reached by the magnetic flux from the edge e1 flows in such a direction as to produce magnetic flux in the same direction as the magnetic flux from the magnetic flux producing unit 2. Both the eddy currents 12a, 12b flow in such a direction as to hinder a change of the magnetic flux from the magnetic flux producing unit 2 caused by rotation of the relative moving body 7.

As described above, on the edge e1 side of the magnetic flux producing unit 2 at the front in the moving direction of the relative moving body 7, the direction of the magnetic flux caused by the eddy current 12a is the same as the direction of the magnetic flux from the magnetic flux producing unit 2. Therefore, an attractive force acts between these magnetic fluxes. On the other hand, on the edge e2 side of the magnetic flux producing unit 2 at the rear in the moving direction of the relative moving body 7, the direction of the magnetic flux caused by the eddy current 12b is opposite to the direction of the magnetic flux from the magnetic flux producing unit 2. Therefore, a repulsive force acts between these magnetic fluxes. The attractive force and the repulsive force impart a stress, or the Lorentz force, to the magnetic flux producing unit 2 in a direction along the moving direction of the relative moving body 7.

The Lorentz force produced in the magnetic flux producing unit 2 may also be described as follows. The direction of the eddy current 12a produced by the magnetic flux from the edge e1 of the magnetic flux producing unit 2 at the front in the moving direction of the relative moving body 7 is opposite to the direction of the eddy current 12b produced by the magnetic flux from the edge e2 of the magnetic flux producing unit 2 at the rear in the moving direction of the relative moving body 7, and therefore, a current flows in a constant direction under the magnetic flux producing unit 2 at all time. When the relative moving body 7 rotates in the direction indicated by the arrow shown in Fig. 2, the currents generated by the eddy currents 12a, 12b are subjected to the Lorentz force in the direction opposite to the moving direction of the relative moving body 7. Therefore, the magnetic flux producing unit 2 that receives the magnetic flux generated by the eddy currents 12a, 12b receives the reaction force of the Lorentz force in the moving direction of the relative moving body 7. This reaction force is the stress, or the Lorentz force, produced in the magnetic flux producing unit 2.

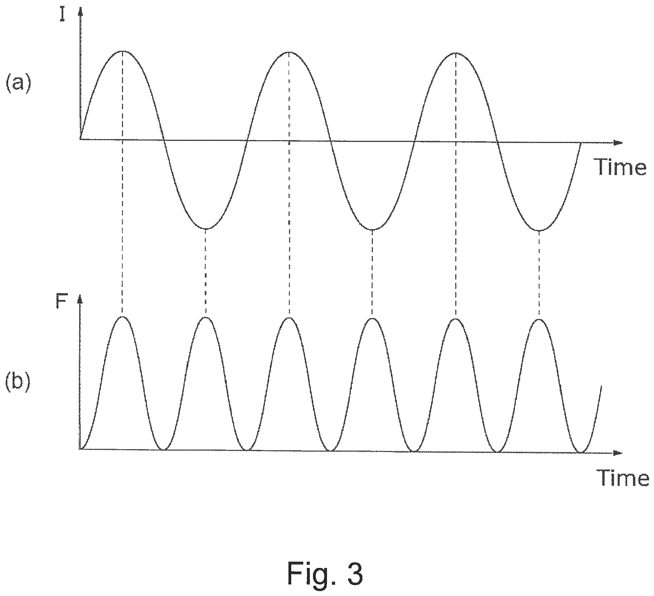

Fig. 3 shows in Part (a) a waveform of an electric current flowing through the excitation coil 8 in the magnetic flux producing unit 2, and Fig. 3 also shows in Part (b) a waveform of the Lorentz force F produced in the magnetic flux producing unit 2. As shown in Part (a) of Fig. 3, the electric current flowing through the excitation coil 8 has a sinusoidal waveform that changes at a predetermined frequency. On the other hand, the Lorentz force F produced in the magnetic flux producing unit 2 has a frequency twice as high as the frequency of the electric current flowing through the excitation coil 8, as shown in Part (b) of Fig. 3. That is, when the electric current flowing through the excitation coil 8 is the maximum or the minimum, the Lorentz force produced in the magnetic flux producing unit 2 is the maximum. The Lorentz force F has a sinusoidal waveform with an amplitude varying in accordance with the moving or rotating speed of the relative moving body 7. Part (b) of Fig. 3 shows an ideal sinusoidal waveform. When the moving or rotating speed of the relative moving body 7 changes, the waveform of the Lorentz force combines the basic frequency component twice as high as the excitation current and the frequency component produced by acceleration or deceleration of the relative moving body 7. As shown in Part (b) of Fig. 3, the timing at which the electric current flowing through the excitation coil 8 is the maximum or the minimum ideally corresponds to the timing at which the Lorentz force produced in the magnetic flux producing unit 2 is the maximum, but actually, these timings may be different due to the hysteresis in the magnetic material of the core of the excitation coil 8.

Accordingly, the moving or rotating speed of the relative moving body 7 can be estimated by detecting the Lorentz force of Part (b) of Fig. 3. Thus, in the embodiment, the Lorentz force produced in the magnetic flux producing unit 2 is transmitted to the stress detecting unit 3 through the stress transmitting member 4, and the stress detecting unit 3 detects an electric signal in accordance with the Lorentz force.

However, the inertial force occurs upon acceleration or deceleration of the relative moving body 7. When the inertial force occurs, the stress acting on the magnetic flux producing unit 2 is changed. Therefore, upon acceleration or deceleration of the relative moving body 7, the stress detected by the stress detecting unit 3 is changed by the amount of the inertial force, and the stress detected by the stress detecting unit 3 fails to indicate the Lorentz force produced in the magnetic flux producing unit 2.

The inertial force acting on the magnetic flux producing unit 2 can be expressed by a periodic function. The periodic function can be expressed as a sum of a plurality of sinusoidal waves having different frequencies by Fourier series expansion. Similarly, signals of the disturbance noise other than the inertial force (for example, vibration of the relative moving body 7) can all be subjected to frequency analysis.

In the embodiment, signal analysis of the disturbance noise including the inertial force is performed to set the frequency of the electric current flowing through the excitation coil 8 in a frequency band not overlapping the frequency bands of the disturbance noise and set the passing frequency characteristics of the band-pass filter 11.

The inertial force changes in accordance with the acceleration of the relative moving body 7. In addition, the disturbance noise other than the inertial force may be different occasionally. Therefore, it is desirable to previously detect the disturbance noise including the inertial force by simulation or experiments to grasp the frequency bands of the disturbance noise.

The band-pass filter 11 has such a frequency characteristic as to cut off the frequency bands of the disturbance noise. Thus, the frequency components originated from the disturbance noise can be removed from the frequency components included in the electric signals that are output by the stress detecting unit 3 in accordance with the stress.

The electric signals that are output by the stress detecting unit 3 in accordance with the stress have an amplitude changing in accordance with the stress, for example. Thus, assuming that the stress produced in the magnetic flux producing unit 2 is the Lorentz force and is free of the disturbance noise, the amplitude of the electric signal output from the stress detecting unit 3 corresponds to the moving or rotating speed of the relative moving body 7. Therefore, the correspondence between the amplitude of the electric signal from the stress detecting unit 3 and the moving or rotating speed of the relative moving body 7 can be previously tabulated or expressed in a formula, such that the speed estimating unit 6 can refer to the table or enter the electric signal of the stress detecting unit 3 to the formula to estimate the moving or rotating speed of the relative moving body 7.

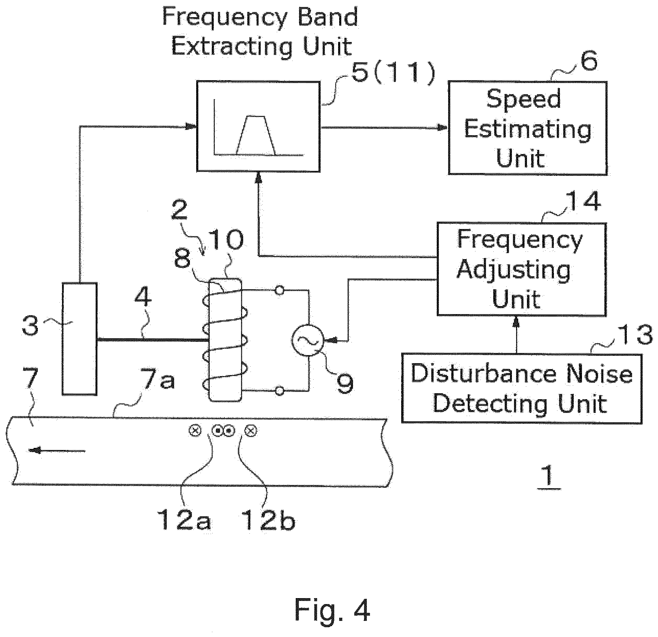

Fig. 4 is a block diagram of the speed detecting device 1 according to a variation, the speed detecting device 1 additionally including a disturbance noise detecting unit 13 and a frequency adjusting unit 14. The disturbance noise detecting unit 13 detects disturbance noise in a vicinity of the speed detecting device 1 by a piezoelectric element, an acceleration sensor, or the like. Various techniques are available for detecting disturbance noise, and any of such techniques may be employed. For example, the vibration of the relative moving body 7 may be detected. The disturbance noise detecting unit 13 may or may not detect the inertial force. The following description is based on an example in which the disturbance noise detecting unit 13 does not detect the inertial force but previously detects the frequency band of the inertial force.

The frequency adjusting unit 14 adjusts the excitation frequency of the excitation coil 8 so as to differentiate the excitation frequency from the frequency band of the inertial force and the frequency bands of the disturbance noise detected by the disturbance noise detecting unit 13, and the frequency adjusting unit 14 also adjusts the frequency characteristics of the band-pass filter 11 so as to differentiate the passing frequency characteristics of the band-pass filter 11 from the frequency band of the inertial force and the frequency bands of the disturbance noise.

In the speed detecting device 1 of Figs. 1 and 4, it is assumed that the time average of the gap between the principal surface 7a of the relative moving body 7 and the magnetic flux producing unit 2 is constant. If the gap changes, the Lorentz force produced in the magnetic flux producing unit 2 is changed, and the electric signal output from the stress detecting unit 3 is also changed. Therefore, when there is possibility that the time average of the gap is varied during movement or rotation of the relative moving body 7, it is desirable to add a gap estimating unit for estimating the gap such that the speed estimating unit 6 takes the estimated gap into account for estimating the moving or rotating speed of the relative moving body 7.

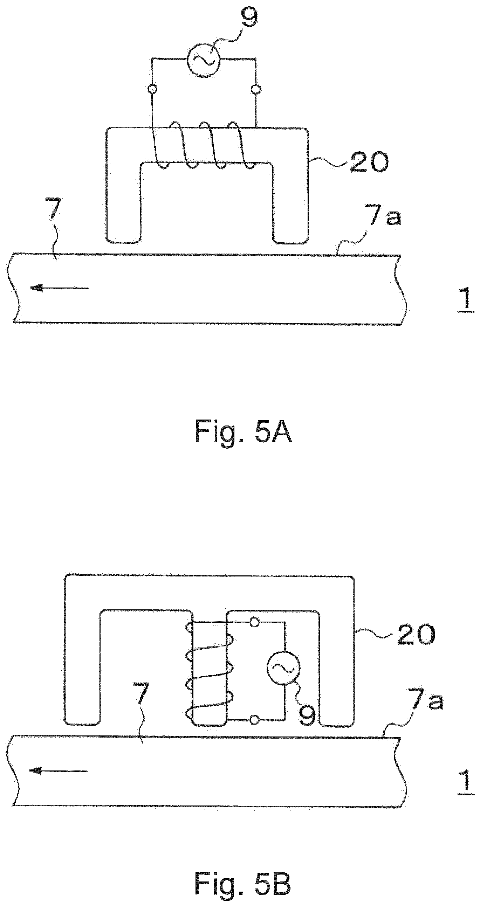

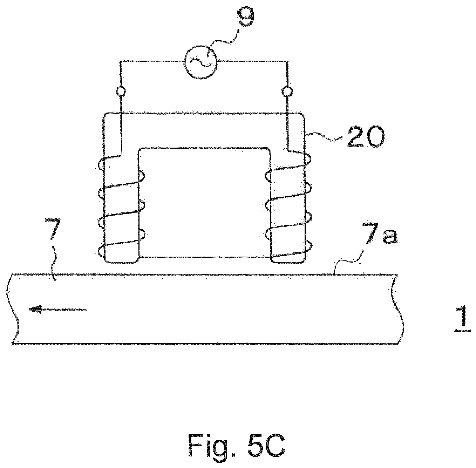

The magnetic flux producing unit 2 in Figs. 1 and 4 includes the magnetic member 10 and the excitation coil 8 wound on the surface of the magnetic member 10. It is also possible that the magnetic flux producing unit 2 includes a yoke 20 of various shapes and the excitation coil 8 wound thereon. In Fig. 5A, the magnetic flux producing unit 2 includes a yoke 20 of a U-shape and the excitation coil 8 wound on the middle portion of the yoke 20. In Fig. 5B, the magnetic flux producing unit 2 includes a yoke 20 of an E-shape and the excitation coil 8 wound on the middle branch portion of the yoke 20. In Fig. 5C, the magnetic flux producing unit 2 includes a yoke 20 of a U-shape and the excitation coil 8 wound on both the branch portions of the yoke 20. The shape of the yoke 20 and the way of winding the excitation coil 8 are not limited to those shown in Figs. 5Ato 5C. The yoke 20 makes it possible to produce a larger magnetic field with a smaller power consumption, resulting in a higher magnetic efficiency.

Thus, in the first embodiment, the Lorentz force produced in the magnetic flux producing unit 2 by the magnetic flux caused by the eddy currents 12a, 12b occurring on the principal surface 7a of the relative moving body 7 is transmitted to the stress detecting unit 3 through the stress transmitting member 4, and the disturbance noise including the inertial force is removed by the band-pass filter 11 from the electric signal output from the stress detecting unit 3 in accordance with the stress, before the speed of the relative moving body 7 is estimated. Therefore, the speed of the relative moving body 7 can be detected accurately without depending on the disturbance noise such as the inertial force.

### < Second Embodiment >

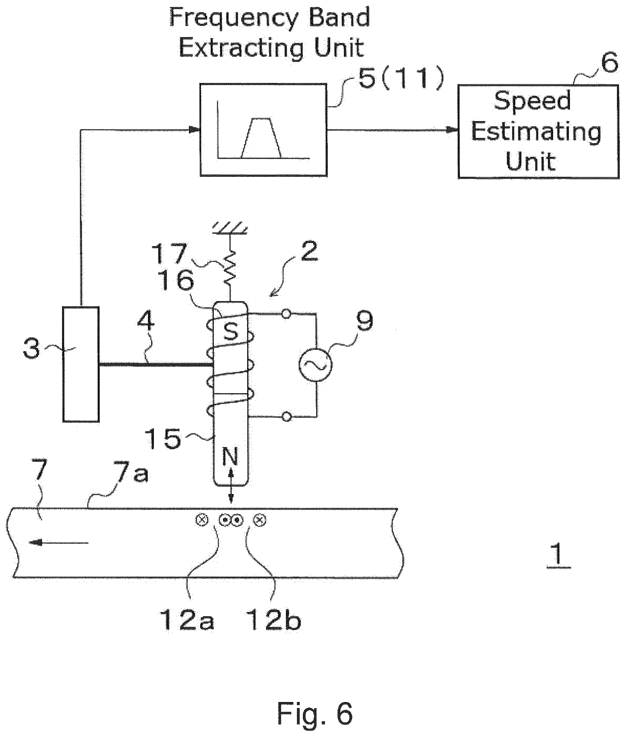

Fig. 6 schematically shows a speed detecting device 1 according to a second embodiment of the present invention. The speed detecting device 1 of Fig. 6 is the same as in Fig. 1 except that the magnetic flux producing unit 2 is different from that in Fig. 1.

The magnetic flux producing unit 2 in Fig. 6 includes a permanent magnet 15, a voice coil 16 wound on the surface of the permanent magnet 15, and a spring member 17 connected to one end side of the permanent magnet 15. When an alternating current flows through the voice coil, the permanent magnet 15 receives a force and the spring member 17 is compressed or expanded, which changes the gap between the magnetic pole on the other end side of the permanent magnet 15 and the principal surface 7a of the relative moving body 7.

As the gap is smaller, the magnetic field intensity on the principal surface 7a of the relative moving body 7 is higher, and as the gap is larger, the magnetic field intensity on the principal surface 7a of the relative moving body 7 is lower. Therefore, the magnetic field intensity on the principal surface 7a of the relative moving body 7 changes periodically. The change in the magnetic field intensity produces the eddy currents 12a, 12b on the principal surface 7a of the relative moving body 7 with a magnitude thereof changing periodically. Since the magnitude of the eddy currents 12a, 12b changes periodically, the Lorentz force produced in the magnetic flux producing unit 2 also changes periodically. The passing frequency characteristics of the band-pass filter 11 may be set in accordance with the frequency of the Lorentz force, so as to remove the noise components detected by the stress detecting unit 3. The frequency components of the Lorentz force having passed through the band-pass filter 11 are input to the speed estimating unit 6 to estimate the moving or rotating speed of the relative moving body 7.

When the relative moving body 7 moves or rotates, the eddy currents 12a, 12b are produced on the principal surface 7a of the relative moving body 7 under the edges of the permanent magnet 15. As in Fig. 2, the direction of the eddy current 12a produced by the magnetic flux from the edge at the front in the moving direction of the relative moving body 7 is opposite to the direction of the eddy current 12b produced by the magnetic flux from the edge at the rear in the moving direction of the relative moving body 7. Thus, the Lorentz force is produced in the permanent magnet 15 in a direction according to the moving or rotating direction of the relative moving body 7.

In Fig. 6, the permanent magnet 15 and the stress detecting unit 3 are connected to each other through the stress transmitting member 4. Therefore, the Lorentz force produced in the permanent magnet 15 is transmitted to the stress detecting unit 3 through the stress transmitting member 4. The stress detecting unit 3 outputs an electric signal corresponding to the stress. The electric signal is filtered by the band-pass filter 11. As described above, the passing frequency characteristics of the band-pass filter 11 are set in accordance with the frequency at which the magnitude of the eddy currents 12a, 12b produced on the principal surface 7a of the relative moving body 7 changes.

The speed detecting device 1 of Fig. 6 is also configured such that the frequency bands of the disturbance noise are previously detected, and the alternating current source 9 supplies to the voice coil 16 an electric current having a frequency different from the frequency bands of the disturbance noise, so as to avoid an effect of the disturbance noise including the inertial force. In addition, the passing frequency characteristics of the band-pass filter 11 are adjusted in accordance with the frequency bands of the disturbance noise, so as to remove the frequency components of the disturbance noise by the band-pass filter 11.

Thus, the speed estimating unit 6 of Fig. 6 can estimate the moving or rotating speed of the relative moving body 7 accurately without an effect of the disturbance noise such as the inertial force As in Fig. 4, the speed detecting device 1 of Fig. 6 may include the disturbance noise detecting unit 13 and the frequency adjusting unit 14.

As described above, in the second embodiment, the magnetic flux producing unit 2 includes the permanent magnet 15 and the voice coil 16, and therefore, the speed of the relative moving body 7 can be detected accurately without depending on the disturbance noise such as the inertial force, as in the first embodiment. Since the second embodiment uses the permanent magnet 15, the magnetic field intensity on the principal surface 7a of the relative moving body 7 can be increased even with a large gap between the permanent magnet 15 and the relative moving body 7. Further, even when a small electric current is supplied to the voice coil 16, the magnetic field intensity on the principal surface 7a of the relative moving body 7 can be changed sufficiently to produce the eddy currents 12a, 12b having a magnitude changing periodically, resulting in a smaller power consumption than in the first embodiment.

### < Third Embodiment >

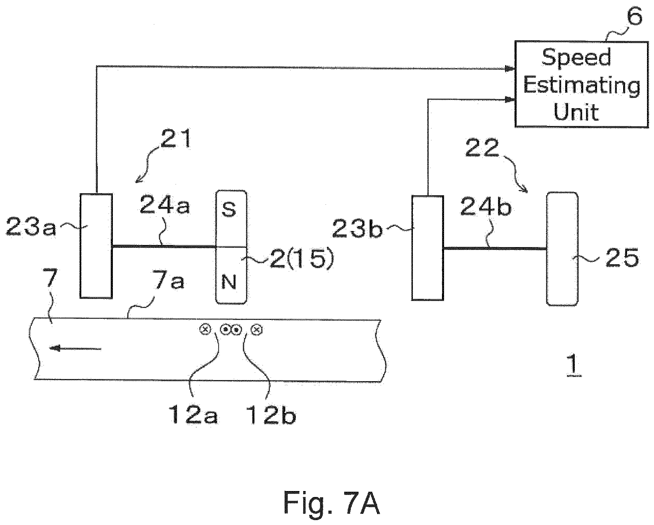

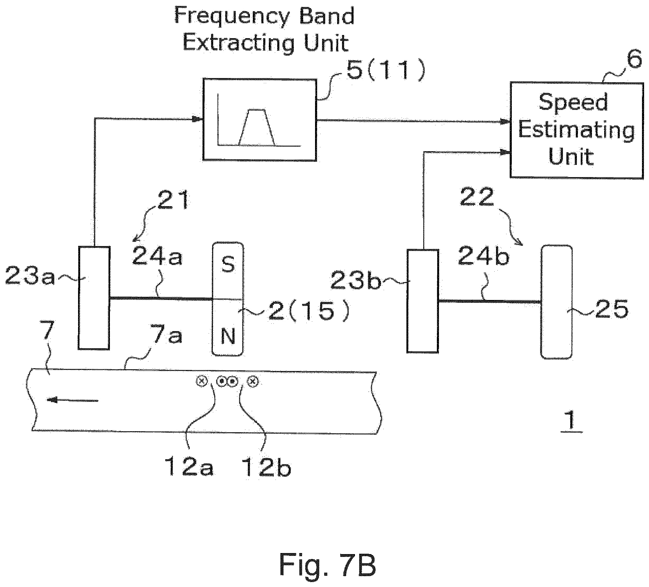

Figs. 7A and 7B schematically show a speed detecting device 1. The speed detecting device 1 of Figs. 7A and 7B includes a first stress detector 21 and a second stress detector 22 each outputting an electric signal corresponding to the stress, and the speed estimating unit 6. The difference between Figs. 7Aand 7B is that the speed detecting device 1 of Fig. 7A does not include a band-pass filter, whereas that of Fig. 7B includes the band-pass filter 11. Thus, Figure 7A is not an embodiment of the claimed invention.

The first stress detector 21 includes the magnetic flux producing unit 2, a first stress detecting unit 23a, and a first stress transmitting member 24a. The magnetic flux producing unit 2 is spaced apart from the principal surface 7a of the relative moving body 7 and configured to produce magnetic flux passing the principal surface 7a of the relative moving body. The first stress detecting unit 23a detects a stress and outputs an electric signal corresponding to the stress. The first stress transmitting member 24a transmits to the first stress detecting unit 23a the Lorentz force produced in the magnetic flux producing unit 2 in accordance with the magnetic flux produced by the eddy currents 12a, 12b occurring on the relative moving body 7 in accordance with the moving or rotating speed of the relative moving body 7.

The second stress detector 22 includes a non-magnetized member 25, a second stress detecting unit 23b, and a second stress transmitting member 24b. The non-magnetized member 25 is spaced apart from the principal surface 7a of the relative moving body 7. The second stress detecting unit 23b detects a stress and outputs an electric signal corresponding to the stress. The second stress transmitting member 24b transmits to the second stress detecting unit 23b the stress caused by the disturbance noise around the relative moving body 7 including the inertial force corresponding to the movement or the rotation of the relative moving body 7.

The magnetic flux producing unit 2 may be, for example, a permanent magnet 15. The permanent magnet 15 is formed by applying an intensive magnetic field to a magnetizable substance for magnetization. The non-magnetized member 25 is made of the same magnetizable substance that forms a base for preparing the permanent magnet 15 and is not magnetized. The non-magnetized member 25 is provided mainly to detect the inertial force, and thus may be referred to also as an inertial member.

The magnetic flux producing unit 2 in the first stress detector 21 includes the permanent magnet 15 and produces the Lorentz force in accordance with the moving or rotating speed of the relative moving body 7. The stress produced in the magnetic flux producing unit 2 includes the stress caused by the disturbance noise such as the inertial force, in addition to the Lorentz force.

On the other hand, the non-magnetized member 25 in the second stress detector 22 is not magnetized, and therefore, the eddy currents 12a, 12b are not produced on the principal surface 7a of the relative moving body 7, and the Lorentz force is not produced in the non-magnetized member 25 in accordance with the moving or rotating speed of the relative moving body 7. The non-magnetized member 25 may be acted on by the stress caused by the disturbance noise such as the inertial force.

The speed estimating unit 6 estimates the moving or rotating speed of the relative moving body 7 based on a difference signal between the electric signal corresponding to the stress detected by the first stress detector 21 and the electric signal corresponding to the stress detected by the second stress detector 22.

The stress detected by the first stress detector 21 includes both the Lorentz force produced in the magnetic flux producing unit 2 in accordance with the moving or rotating speed of the relative moving body 7 and the stress caused by the disturbance noise including the inertial force, whereas the stress detected by the second stress detector 22 does not include the Lorentz force and includes the stress caused by the disturbance noise including the inertial force. Therefore, taking the difference between the electric signals output from the first stress detector 21 and the second stress detector 22 makes it possible to cancel the stress caused by the disturbance noise including the inertial force and extract the Lorentz force only. Thus, the speed detecting device 1 which does not include the band-pass filter 11 as in Fig. 7A, can detect the moving or rotating speed of the relative moving body 7 accurately. The speed detecting device 1 of Fig. 7B includes the band-pass filter 11 for the purpose of canceling the disturbance noise other than the inertial force.

As described above, Figures 7A and 7B include the first stress detector 21 and the second stress detector 22, and the difference between the electric signals output from the first stress detector 21 and the second stress detector 22 is taken to cancel the disturbance noise. Therefore, the band-pass filter 11 is not necessary, resulting in a simple arrangement for detecting the moving or rotating speed of the relative moving body 7 accurately.

The concept of the relative moving body 7 in the first to third embodiments described above includes not only a relative moving body that itself moves or rotates but also a relative moving body that moves relative to the speed detecting device 1. Therefore, in the first to third embodiments, in a case where the speed detecting device 1 is installed in a train or the like, a fixture such as a rail that moves relative to the train or the like is also construed as being included in the concept of the relative moving body 7. The relative moving body 7 in the first to third embodiment is a conductor.

## Claims

1. A speed detecting device (1), comprising:
a magnetic flux producing unit (2) spaced apart from a principal surface of a relative moving body (7) and configured to change, at a predetermined frequency, magnetic flux passing over the principal surface of the relative moving body (7); a stress detecting unit (3) for detecting a stress and outputting an electric signal corresponding to the stress;
a stress transmitting member (4) for transmitting to the stress detecting unit (3) a Lorentz force produced in the magnetic flux producing unit (2) in accordance with magnetic flux produced by eddy currents, the eddy currents occurring on the relative moving body (7) in accordance with a moving or rotating speed of the relative moving body (7);
a frequency band extracting unit (5) for extracting a frequency component twice as high as the predetermined frequency from the electric signal; and
a speed estimating unit (6) for estimating the moving or rotating speed of the relative moving body (7) based on the frequency component extracted by the frequency band extracting unit (5).

2. The speed detecting device (1) according to claim 1, wherein the magnetic flux producing unit (2) is configured to set the predetermined frequency at a frequency different from a frequency band related to an inertial force, the inertial force acting on the stress detecting unit (3) in accordance with acceleration or deceleration of the relative moving body (7).

3. The speed detecting device (1) according to claim 1, wherein the magnetic flux producing unit (2) is configured to set the predetermined frequency at a frequency different from a frequency band of disturbance noise detected by the stress detecting unit (3).

4. The speed detecting device (1) according to any one of claims 1 to 3, wherein the magnetic flux producing unit (2) includes an excitation coil (8) configured to change at a predetermined frequency the magnetic flux passing over the principal surface of the relative moving body (7).

5. The speed detecting device (1) according to any one of claims 1 to 3, wherein the magnetic flux producing unit (2) includes:
a permanent magnet (15) spaced apart from and opposed to the principal surface of the relative moving body (7); and
a voice coil (16) configured to change at the predetermined frequency a gap between the principal surface of the relative moving body (7) and the permanent magnet (15).

6. The speed detecting device (1) according to any one of claims 1 to 5, further comprising:
a disturbance noise detecting unit (13) for detecting disturbance noise around the relative moving body (7),
wherein the magnetic flux producing unit (2) is adapted to set the predetermined frequency at a
frequency different from a frequency band of the disturbance noise.

7. The speed detecting device (1) according to any one of claims 1 to 6, wherein the stress transmitting member (4) is a rigid member that is adapted to transmit the
Lorentz force to the stress detecting unit (3).

8. The speed detecting device (1) according to any one of claims 1 to 6, wherein the stress transmitting member (4) is adapted to transmit
an air pressure
corresponding to the Lorentz force to the stress detecting unit (3).

9. The speed detecting device (1) according to any one of claims 1 to 8, wherein the stress detecting unit (3) is a force sensor, a strain sensor, or an air pressure sensor.

10. A speed detecting method, comprising steps of:
changing, at a predetermined frequency, magnetic flux passing over a principal surface of a relative moving body (7), by means of a magnetic flux producing unit (2) spaced apart from the principal surface of the relative moving body (7);
detecting a stress and outputting an electric signal corresponding to the stress, by means of a stress detecting unit (3);
transmitting to the stress detecting unit (3) a Lorentz force produced in the magnetic flux producing unit (2) in accordance with magnetic flux produced by eddy currents, the eddy currents occurring on the relative moving body (7) in accordance with a moving or rotating speed of the relative moving body (7);
extracting a frequency component twice as high as the predetermined frequency from the electric signal; and
estimating the moving or rotating speed of the relative moving body (7) based on the extracted frequency component.

## Patentansprüche

1. Geschwindigkeits-Erfassungsvorrichtung (1), die umfasst:
eine Einheit (2) zum Erzeugen von Magnetfluss, die von einer Hauptfläche eines Relativbewegungs-Körpers (7) beabstandet und so ausgeführt ist, dass sie Magnetfluss, der über die Hauptfläche des Relativbewegungs-Körpers (7) fließt, mit einer vorgegebenen Frequenz ändert;
eine Einheit (3) zum Erfassen von Spannung, mit der eine Spannung erfasst wird und ein der Spannung entsprechendes elektrisches Signal ausgegeben wird;
ein Element (4) zum Übertragen von Spannung, mit dem eine Lorentz-Kraft, die in der Einheit (2) zum Erzeugen von Magnetfluss entsprechend durch Wirbelströme erzeugtem Magnetfluss erzeugt wird, zu der Einheit (3) zum Erfassen von Spannung übertragen wird, wobei die Wirbelströme an dem Relativbewegungs-Körper (7) entsprechend einer Bewegungs- oder Drehgeschwindigkeit des Relativbewegungs-Körpers (7) auftreten;
eine Einheit (5) zum Extrahieren eines Frequenzbandes, mit der eine Frequenzkomponente, die doppelt so hoch ist wie die vorgegebene Frequenz, aus dem elektrischen Signal extrahiert wird; und
eine Einheit (6) zum Schätzen von Geschwindigkeit, mit der die Bewegungs- oder Drehgeschwindigkeit des Relativbewegungs-Körpers (7) auf Basis der durch die Einheit (5) zum Extrahieren eines Frequenzbandes extrahierten Frequenzkomponente geschätzt wird.

2. Geschwindigkeits-Erfassungsvorrichtung (1) nach Anspruch 1, wobei die Einheit (2) zum Erzeugen von Magnetfluss so ausgeführt ist, dass sie die vorgegebene Frequenz auf eine Frequenz einstellt, die sich von einem Frequenzband unterscheidet, das mit einer Trägheitskraft zusammenhängt, wobei die Trägheitskraft entsprechend Geschwindigkeitszunahme oder Geschwindigkeitsabnahme des Relativbewegungs-Körpers (7) auf die Einheit (3) zum Erfassen von Spannung wirkt.

3. Geschwindigkeits-Erfassungsvorrichtung (1) nach Anspruch 1, wobei die Einheit (2) zum Erzeugen von Magnetfluss so ausgeführt ist, dass sie die vorgegebene Frequenz auf eine Frequenz einstellt, die sich von einem Frequenzband von durch die Einheit (3) zum Erfassen von Spannung erfasstem Störgeräusch unterscheidet.

4. Geschwindigkeits-Erfassungsvorrichtung (1) nach einem der Ansprüche 1 bis 3,
wobei die Einheit (2) zum Erzeugen von Magnetfluss eine Erregerspule (8) enthält, die so ausgeführt ist, dass sie den über die Hauptfläche des Relativbewegungs-Körpers (7) fließenden Magnetfluss mit einer vorgegebenen Frequenz ändert.

5. Geschwindigkeits-Erfassungsvorrichtung (1) nach einem der Ansprüche 1 bis 3,
wobei die Einheit (2) zum Erzeugen von Magnetfluss enthält:
einen Permanentmagneten (15), der von der Hauptfläche des Relativbewegungs-Körpers (7) beabstandet ist und ihr gegenüberliegt; sowie
eine Schwingspule (16), die so ausgeführt ist, dass sie einen Spalt zwischen der Hauptfläche des Relativbewegungs-Körpers (7) und dem Permanentmagneten (15) mit der vorgegebenen Frequenz ändert.

6. Geschwindigkeits-Erfassungsvorrichtung (1) nach einem der Ansprüche 1 bis 5, die des Weiteren umfasst:
eine Einheit (13) zum Erfassen von Störgeräusch, mit der Störgeräusch um den Relativbewegungs-Körper (7) herum erfasst wird,
wobei die Einheit (2) zum Erzeugen von Magnetfluss so eingerichtet ist, dass sie die vorgegebene Frequenz auf eine Frequenz einstellt, die sich von einem Frequenzband des Störgeräusches unterscheidet.

7. Geschwindigkeits-Erfassungsvorrichtung (1) nach einem der Ansprüche 1 bis 6,
wobei das Element (4) zum Übertragen von Spannung ein starres Element ist, das so eingerichtet ist, dass es die Lorentz-Kraft zu der Einheit (3) zum Erfassen von Spannung überträgt.

8. Geschwindigkeits-Erfassungsvorrichtung (1) nach einem der Ansprüche 1 bis 6,
wobei das Element (4) zum Übertragen von Spannung so eingerichtet ist, dass es einen der Lorentz-Kraft entsprechenden Luftdruck zu der Einheit (3) zum Erfassen von Spannung überträgt.

9. Geschwindigkeits-Erfassungsvorrichtung (1) nach einem der Ansprüche 1 bis 8,
wobei die Einheit (3) zum Erfassen von Spannung ein Kraftsensor, ein Dehnungssensor oder ein Luftdrucksensor ist.

10. Geschwindigkeitserfassungs-Verfahren, das die folgenden Schritte umfasst:
Ändern von Magnetfluss, der über eine Hauptfläche eines Relativbewegungs-Körpers (7) fließt, mit einer vorgegebenen Frequenz mittels einer Einheit (2) zum Erzeugen von Magnetfluss, die von der Hauptfläche des Relativbewegungs-Körpers (7) beabstandet ist;
Erfassen einer Spannung und Ausgeben eines der Spannung entsprechenden elektrischen Signals mittels einer Einheit (3) zum Erfassen von Spannung;
Übertragen einer Lorentz-Kraft, die in der Einheit (2) zum Erzeugen von Magnetfluss entsprechend durch Wirbelströme erzeugtem Magnetfluss erzeugt wird, zu der Einheit (3) zum Erfassen von Spannung, wobei die Wirbelströme an dem Relativbewegungs-Körper (7) entsprechend einer Bewegungs- oder Drehgeschwindigkeit des Relativbewegungs-Körpers (7) auftreten;
Extrahieren einer Frequenzkomponente, die doppelt so hoch ist wie die vorgegebene Frequenz, aus dem elektrischen Signal; und
Schätzen der Bewegungs- oder Drehgeschwindigkeit des Relativbewegungs-Körpers (7) auf Basis der extrahierten Frequenzkomponente.

## Revendications

1. Dispositif de détection de vitesse (1), comprenant :
une unité de production de flux magnétique (2) espacée d'une surface principale d'un corps en déplacement relatif (7) et configurée pour modifier, à une fréquence prédéterminée, un flux magnétique passant par-dessus la surface principale du corps en déplacement relatif (7) ;
une unité de détection de contrainte (3) pour détecter une contrainte et sortir un signal électrique correspondant à la contrainte ;
un élément de transmission de contrainte (4) pour transmettre à l'unité de détection de contrainte (3) une force de Lorentz produite dans l'unité de production de flux magnétique (2) conformément à un flux magnétique produit par des courants de Foucault, les courants de Foucault survenant sur le corps en déplacement relatif (7) conformément à une vitesse de déplacement ou de rotation du corps en déplacement relatif (7) ;
une unité d'extraction de bande de fréquences (5) pour extraire une composante de fréquence deux fois plus élevée que la fréquence prédéterminée depuis le signal électrique ; et
une unité d'estimation de vitesse (6) pour estimer la vitesse de déplacement ou de rotation du corps en déplacement relatif (7) sur la base de la composante de fréquence extraite par l'unité d'extraction de bande de fréquences (5).

2. Dispositif de détection de vitesse (1) selon la revendication 1, dans lequel l'unité de production de flux magnétique (2) est configurée pour régler la fréquence prédéterminée à une fréquence différente d'une bande de fréquences relative à une force d'inertie, la force d'inertie agissant sur l'unité de détection de contrainte (3) conformément à une accélération ou à une décélération du corps en déplacement relatif (7).

3. Dispositif de détection de vitesse (1) selon la revendication 1, dans lequel l'unité de production de flux magnétique (2) est configurée pour régler la fréquence prédéterminée à une fréquence différente d'une bande de fréquences de bruit parasite détectée par l'unité de détection de contrainte (3).

4. Dispositif de détection de vitesse (1) selon l'une quelconque des revendications 1 à 3, dans lequel l'unité de production de flux magnétique (2) inclut une bobine d'excitation (8) configurée pour modifier à une fréquence prédéterminée le flux magnétique passant par-dessus la surface principale du corps en déplacement relatif (7).

5. Dispositif de détection de vitesse (1) selon l'une quelconque des revendications 1 à 3, dans lequel l'unité de production de flux magnétique (2) inclut :
un aimant permanent (15) espacé de et opposé à la surface principale du corps en déplacement relatif (7) ; et
une bobine acoustique (16) configurée pour modifier à la fréquence prédéterminée un écart entre la surface principale du corps en déplacement relatif (7) et l'aimant permanent (15).

6. Dispositif de détection de vitesse (1) selon l'une quelconque des revendications 1 à 5, comprenant en outre :
une unité de détection de bruit parasite (13) pour détecter un bruit parasite autour du corps en déplacement relatif (7),
dans lequel l'unité de production de flux magnétique (2) est adaptée pour régler la fréquence prédéterminée à une fréquence différente d'une bande de fréquences du bruit parasite.

7. Dispositif de détection de vitesse (1) selon l'une quelconque des revendications 1 à 6,
dans lequel l'élément de transmission de contrainte (4) est un élément rigide qui est adapté pour transmettre la force de Lorentz à l'unité de détection de contrainte (3).

8. Dispositif de détection de vitesse (1) selon l'une quelconque des revendications 1 à 6,
dans lequel l'élément de transmission de contrainte (4) est adapté pour transmettre une pression d'air correspondant à la force de Lorentz à l'unité de détection de contrainte (3).

9. Dispositif de détection de vitesse (1) selon l'une quelconque des revendications 1 à 8,
dans lequel l'unité de détection de contrainte (3) est un capteur de force, un capteur de contrainte ou un capteur de pression d'air.

10. Procédé de détection de vitesse, comprenant les étapes de :
modification, à une fréquence prédéterminée, d'un flux magnétique passant par-dessus une surface principale d'un corps en déplacement relatif (7), au moyen d'une unité de production de flux magnétique (2) espacée de la surface principale du corps en déplacement relatif (7) ;
détection d'une contrainte et sortie d'un signal électrique correspondant à la contrainte, au moyen d'une unité de détection de contrainte (3) ;
transmission à l'unité de détection de contrainte (3) d'une force de Lorentz produite dans l'unité de production de flux magnétique (2) conformément au flux magnétique produit par des courants de Foucault, les courants de Foucault survenant sur le corps en déplacement relatif (7) conformément à une vitesse de déplacement ou de rotation du corps en déplacement relatif (7) ;
extraction d'une composante de fréquence deux fois plus élevée que la fréquence prédéterminée depuis le signal électrique ; et
estimation de la vitesse de déplacement ou de rotation du corps en déplacement relatif (7) sur la base de la composante de fréquence extraite.
